# EUROPEAN PATENT SPECIFICATION

(11) **EP 1 404 509 B1**
(45) Date of publication and mention of the grant of the patent: **23.11.2005**
(21) Application number: 02776575.9
(22) Date of filing: 03.06.2002
(51) Int. Cl.: B29C 69/02, B29C 43/18, B29C 43/34, B60R 13/02, B29C 51/12

(54) **THERMOPLASTIC SANDWICH PANEL AND TWIN SHEET MOULDING METHOD OF MAKING SAME**
THERMOPLASTISCHE SANDWICHTAFEL UND DOPPELFOLIENGIESSVERFAHREN ZUR HERSTELLUNG DERSELBEN
PANNEAU SANDWICH THERMOPLASTIQUE ET PROCEDE DE MOULAGE EN FEUILLES DOUBLES SERVANT A LE FABRIQUER

(30) Priority: 01.06.2001 US 295113 P
(43) Date of publication of application: 07.04.2004
(73) Proprietor: Meridian Automative Systems, Inc., Dearborn, MI 48126 (US)
(72) Inventor: VAN MANEN, Dick, T., Canandaigua, NY 14424 (US)
(74) Representative: Schäfer, Matthias W.
(86) International application number: PCT/US2002/017471
(87) International publication number: WO 2002/098637

(56) References cited:
- EP-A- 0 649 736
- DE-A- 4 037 675
- DE-A- 19 814 314
- FR-A- 2 698 578
- GB-A- 2 216 081
- US-A- 4 556 529

## Description

### BACKGROUND OF THE INVENTION

The present invention relates to a method of manufacturing thermoplastic panels for automotive and other uses according to the features of the preamble of claim 1. Such a method is discloses from EP-A- 0 649 736. The present invention also relates to a panel according to claim 9.

Various types of automotive panels, including interior panels such as rear shelf panels, inner door panels, etc., are usually either molded in a single layer with ribs or are assembled to a second layer to gain structural strength and/or acoustic properties desired. Typical layers may include a relatively rigid panel for strength, a decorative layer (with a carpeting, fabric or vinyl exposed surface), a core panel of foam or other light weight construction to help with rigidizing and/or soundproofing, a back panel for added soundproofing, and a barrier sandwich.

These panels are typically formed by injection molding a thermoplastic material directly into a mold. The mold also can contain one or more layers of other laminate materials, such as a decorative layer. The mold is then closed, distributing the thermoplastic material throughout the available space in the cavity, forming the panel, Where additional layers are included, the mold laminates the layers.

From EP 0649736 A1 a method for molding panels in a sheet molding system is known comprised of a thermoplastic sheet delivery station and two mold halves, the method comprising the steps of
(a) delivering two sheeting layers of thermoplastic material between two mold halves from a thermoplastic sheet delivery station;
(b) inserting a rigidizing insert between the two sheeting layers of thermoplastic material;
(c) closing the mold halves to bring the two sheeting layers of thermoplastic material in contact with the insert to form a thermoplastic sandwich; and
(d) compressing the thermoplastic sand wich between the mold halves to form a panel.

From US 4,556,529 a thermoplastic insert sandwich is known comprising at least two layers of thermoplastic sheeting layers abutting at least two sides of a pre-manufactured rigidizing insert consisting of a finely porous or coarsely porous material. From GB2216081 A is known a sandwich panel to be used in the automotive industry incorporating a urethane foam core material for acoustic insulation purposes.

The panels are typically formed by injection molding a thermoplastic material directly into a mold or by sheet molding, which comprises inserting previously-manufactured sheeting of thermoplastic material into a mold. The mold also can contain one or more layers of other laminate materials, such as a decorative layer. Once the sheeting of material are placed in the mold the mold is then closed, distributing the thermoplastic material throughout the contours of the cavity, and thus forming the panel. Where an additional layer is included, such as a decorative layer, it is typically laminated to the thermoplastic material as part of the molding process. Vacuum forming may also be used to assist the molding process.

With these types of molding processes, a recurring problem is how to provide a laminate strong enough to be used as load floors or other panels that require enhanced rigidity and how to assemble such laminates in an economical and efficient manner. It is also a problem how to align the layers around the insert to increase bonding peripherally. It is an object of this invention, therefore, to provide a laminate that exhibits greater rigidity with minimal or no use of adhesives. It is a further object of this invention to provide a process that permits the manufacture of such laminates without the excessive use of adhesives.

### SUMMARY OF THE INVENTION

This objective is achieved by the method according to the features of the characterising part of claim 1 and by the panel according to the features of claim 9.

Laminate panels are made using two layers of thermoplastic material which are dispensed vertically coming down from a thermoplastic material delivery station. The two separate sheeting which may be the same or different resins, but must be thermoplastic and capable of being bonded together either by heat alone or by adhesives on an insert A rigidizing insert, comprising, for example, structural foam, compatible thermoplastic foam, thermoplastic honeycomb core or soundproofing/acoustic foam, is inserted between the two sheeting layers to form a multi-layer laminate.

Typical target parts to be made with the process of the present invention are: rear shelf trim panels; load floors; spare tire covers; and knee bolsters, although the invention is not limited to these products.

### BRIEF DESCRIPTION OF THE DRAWINGS

FIG. 1 is a side view of the sheet molding system of the present invention.
FIG. 2 is a cross-sectional view of a panel made using the sheet molding system described herein.

### DESCRIPTION OF THE PREFERRED EMBODIMENT

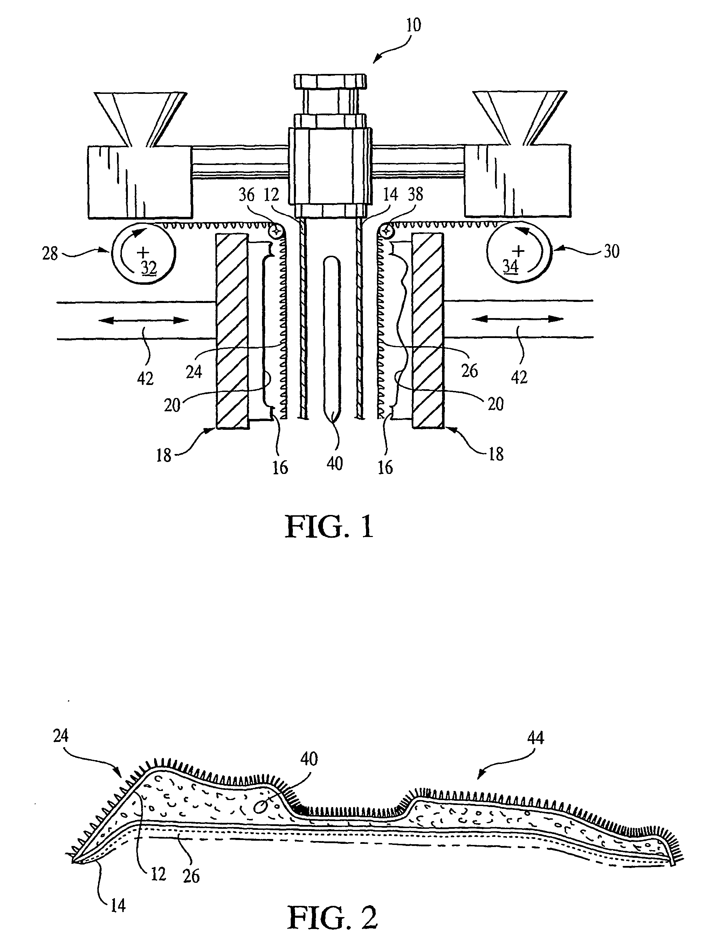

This process is illustrated in FIG. 1. The sheet molding system of the present invention includes a hot thermoplastic sheet material delivery station 10, aligned to deliver two or more heated thermoplastic sheeting layers 12, 14 vertically downward between mold faces 16 and 18. Mold faces 16, 18 have depressions 20 which, when they abut, form a cavity with contours in the shape of the part that is to be formed by the sheet molding system.

In a preferred embodiment, the thermoplastic sheet delivery station 10 includes an extruder 22 which dispenses hot sheeting layers of thermoplastic sheet material 12, 14 in front of mold faces 16 in mold halves 18. To form such sheet material, the thermoplastic material may be calendared through hot rollers producing sheeting layers, and through additional hot rollers to produce the desired thickness. Alternatively, the thermoplastic sheet delivery station 10 can deliver other types of thermoplastic sheet materials, such as a heated flax/polypropylene moldable mat, as one or more thermoplastic sheeting layer(s) of part construction, dependent solely upon design preferences. Such flax/polypropylene mats are described in U.S. Patent No. 5,614,285. In this case, the hot thermoplastic sheet delivery station 10 can comprise a flax/polypropylene mat unroller, with heated rollers or hot plates heating the mat to an appropriate temperature before the mat sheeting layers enter the space between mold faces 16.

If desired, surface covering material(s) 24, 26 can be dispensed from insert or roller systems 28, 30 comprising surface covering material unroll station(s) 32, 34 and rollers 36, 38. The insert or roller systems 28, 30 dispense the surface covering material 24, 26 so as to interpose the surface covering material 24, 26 between the sheeting layer(s) 12, 14 and their respective mold faces 16. Where a surface covering material is used, the desired side(s) of the surface covering material for ultimate part appearance or performance objectives on the front or back of the part or both is oriented facing the mold face 16.

A rigidizing insert 40 is inserted between the thermoplastic sheeting layers 12, 14, and may be pre-coated with adhesives if needed to cause bonding between the thermoplastic layers of the sandwich. The rigidizing insert 40 may assist in rigidizing the formed part, may be compatible to the thermoplastic material, and can be lightweight and fusable. Exemplary rigidizing inserts include structural foam, compatible thermoplastic foam, thermoplastic honeycomb core or soundproofing/acoustic foam. The rigidizing insert may be inserted from the front or back of the machine on a reciprocating rack with pins that hold the insert in place between the thermoplastic sheeting layers. The rigidizing insert included any pre-manufactured inserts, including flat-stabbed blanks, partially-shaped blanks, or pre-molded inserts.

After the rigidizing insert 40 is inserted between layers of thermoplastic sheeting layers 12, 14 and the surface covering material 24, 26, mold halves 18 are forced together by pistons 42. As the mold halves 18 close together, they press the thermoplastic sheeting layers 12, 14, the rigidizing insert 40, and any optional surface covering materials 24, 26 together to form a thermoplastic-insert sandwich.

As the mold halves 18 close together fully the mold faces 16 force the thermoplastic sheeting layers and to a certain extent, the insert 40 to move with any covering material into contact with the molds. Thereafter, the molded laminate cools, rigidizing to form a part. A vacuum may be drawn in one or both halves during the molding process to assist in distribution of the thermoplastic-insert sandwich. If any insert used stays inside the periphery joint of bondable compatible thermoplastic layers, the part will have a strong bond at the periphery, just as if no insert was used. Inserts 40 which protrude outside the joint area must be treated to allow the joint area bond to still develop.

Cooling of parts made in this manner may require acceleration through the use of refrigerated air or nitrogen or carbon dioxide gas to be supplied to the outside surfaces of the part through vents in the mold halves 18.

As shown in FIG. 2, the novel laminate panel 44 made using this system comprises at least two thermoplastic layers 12, 14, the insert 40, and one or more optional surface covering layers 24, 26. The exposed surfaces of the molded thermoplastic layers 12, 14 or optional surface covering layers 24, 26 conform generally to the depressions 20 in mold faces 16. Exemplary surface covering layers include carpeting (e.g., for exposed automotive interior panels) and sound absorbers or barriers.

Using a dual clamp type machine with sheeting layers being dispensed to the two clamps in alternating sequence using a three minute overall cycle, it is estimated that 40 parts per hour could be made by two operators and a $1.5 million investment.

Trim of thermoplastic compatible ingredients could be round and blended back in at least one layer of the parts, keeping material costs low in comparison to other processes using mats or purchased sheets.

The present invention is not limited to interior trim panels, but can be applied equally well to any other types of panels, such as other automotive panels and to non-automotive applications in the office furniture and building trade.

Preferred embodiments of the present invention have been described herein. It is to be understood that modifications and changes can be made without departing from the scope of the invention, as defined by the following claims which are to be interpreted and understood in view of the foregoing.

## Claims

1. A method for molding panels in a sheet molding system comprised of a thermoplastic sheet delivery station (10) and two mold halves (18), the method comprising the steps of
(a) delivering two sheeting layers of thermoplastic material (12, 14) between the two mold halves (18) from the thermoplastic sheet delivery station (10);
(b) inserting a rigidizing insert (40) between the two sheeting layers (12, 14) of thermoplastic material;
(c) closing the mold halves (18) to bring the two sheeting layers of thermoplastic material (12, 14) in contact with the insert (40) to form a thermoplastic sandwich; and
(d) compressing the thermoplastic sandwich between the mold halves (18) to form a panel,
**characterized in that**
the at least two sheeting layers of thermoplastic material (12, 14) are delivered vertically downward from the thermoplastic sheet delivery station (10) disposed vertically above the mold halves (18); and
that a layer of surface covering material (24, 26) being delivered to at least one mold half (18); and
that the surface covering material (24, 26) being delivered from a side position to align with the thermoplastic sheeting material (12, 14).

2. The method of claim 1, **characterized in that** the surface covering material (24, 26) is unrolled from an insert or roller system (28, 30) comprising surface covering material unroll stations (32, 34) and one or more pairs of calendaring rollers (36, 38) to align the surface covering material (24, 26) with the thermoplastic sheeting in a downward direction.

3. The method of claim 1, wherein the thermoplastic sheet delivery station (10) comprises one or more extruders.

4. The method of claim 1, wherein the thermoplastic sheet is a flax/polypropylene sheet.

5. The method of claim 1, wherein the surface covering material (24, 26) is comprised of carpeting.

6. The method of claim 5, wherein the surface covering material (24, 26) is delivered to the mold half (18) which forms the top side of the part formed.

7. The method of claim 1, wherein the thermoplastic sheeting layers (12, 14) delivered to both mold halves (18) are comprised of the same thermoplastic material.

8. The method of claim 1, wherein the thermoplastic sheeting layers (12, 14) delivered to the mold halves (18) are comprised of different thermoplastic material.

9. A thermoplastic insert sandwich panel manufactures by the method according to claim 1 comprising at least two sheeting layers of thermoplastic material (12, 14) abutting at least two sides of a partially shaped or pre-mold, rigidizing insert (40) at least a layer of decorative material (24, 26),
wherein
the insert is comprised of a compatible thermoplastic porous core material.

10. The thermoplastic insert sandwich of claim 9, further **characterized in that** the compatibal thermoplastic foam core material is a sound proofing / accoustic foam.

11. The thermoplastic insert sandwich according to any of claims 9 to 11 further **characterized in that** it is a laminate panel.

12. The laminate panel of claim 12 further **characterized in that** it is an automotive trim panel.

## Patentansprüche

1. Verfahren zum Formpressen von Paneelen (Platten) in einem Folien-Preßsystem, welches eine thermoplastische Folienabgabestation (10) und zwei Formhälften (18) aufweist, wobei das Verfahren die Schritte aufweist:
a) Ausgeben von zwei Folienlagen thermoplastischen Materials (12,14) zwischen die zwei Formhälften (18) aus der thermoplastischen Folienabgabestation (10);
b) Einfügen eines versteifenden Einsatzes (40) zwischen die zwei Folienlagen (12,14) des thermoplastischen Materials;
c) Schließen der zwei Formhälften (18) zum in Berührungbringen der zwei Folienlagen thermoplastischen Materials (12,14) mit dem Einsatz (40) zum Bilden eines thermoplastischen Sandwiches; und
d) Zusammendrücken des thermoplastischen Sandwiches zwischen den zwei Formhälften (18) zum Formen eines Paneels,
**dadurch gekennzeichnet, daß** die wenigstens zwei Folienlagen thermoplastischen Materials (12,14) vertikal hinab aus der thermoplastischen Folienabgabestation (10) ausgegeben werden, die vertikal oberhalb der Formhälften (18) angeordnet ist; und daß eine Lage von oberflächenabdeckendem Material (24,26) zu mindestens einer Formhälfte geliefert wird; und daß das oberflächenabdeckende Material (24,26) aus einer Seitenposition geliefert wird, um sich mit dem thermoplastischen Belagmaterial (12,14) abzugleichen.

2. Verfahren nach Patentanspruch 1, **dadurch gekennzeichnet, daß** das oberflächenabdeckende Material (24,26) von einem Einsatz oder Rollensystem (28,30) abgerollt wird, das über Abrollstationen (32,34) für oberflächenabdeckendes Material verfügt, sowie über ein oder mehrere Paare von Glättungsrollen (36,38) zum Abgleichen des oberflächenabdeckenden Materials (24,26) mit den thermoplastischen Folien in einer Abwärtsrichtung.

3. Verfahren nach Patentanspruch 1, bei dem die thermoplastische Folienabgabestation (10) einen oder mehrere Extruder aufweist.

4. Verfahren nach Patentanspruch 1, bei dem die thermoplastische Folien eine Leinen/Polypropylen-Folie ist.

5. Verfahren nach Patentanspruch 1, bei dem das oberflächenabdeckende Material (24,26) aus Teppich besteht.

6. Verfahren nach Patentanspruch 5, bei dem das oberflächenabdeckende Material (24,26) zu derjenigen Formhälfte (18) ausgegeben wird, welche die Oberseite des geformten Teils bildet.

7. Verfahren nach Patentanspruch 1, bei dem die thermoplastischen Beläge (12,14), die zu beiden Formhälften (18) ausgegeben werden, sich aus demselben thermoplastischen Material zusammensetzen.

8. Verfahren nach Patentanspruch 1, bei dem die thermoplastischen Beläge (12,14), die zu den Formhälften (18) ausgegeben werden, sich aus verschiedenem thermoplastischen Material zusammensetzen.

9. Thermoplastisches Einsatz-Sandwich-Paneel, hergestellt gemäß dem Verfahren nach Patentanspruch 1, das sich aus mindestens zwei Belägen thermoplastischen Materials (12,14) zusammensetzt, die an mindestens zwei Seiten eines teilweise gestalteten oder vorgeformten versteifenden Einsatzes (40) angrenzen, mit wenigstens einer Lage dekorativem Materials (24,26), bei dem der Einsatz aus einem kompatiblen thermoplastischen porösen Kernmaterial besteht.

10. Thermoplastisches Einsatz-Sandwich nach Patentanspruch 9, **dadurch gekennzeichnet, daß** das kompatible thermoplastische poröse Kernmaterial ein Geräuschdämmender-/Akustik-Schaumstoff ist.

11. Thermoplastisches Einsatz-Sandwich nach Patentanspruch 9 oder 10, **dadurch gekennzeichnet, daß** es ein Laminat-Paneel ist.

12. Laminat-Platte des Patentanspruchs 11, **dadurch gekennzeichnet, daß** es ein Fahrzeug-Einstellpaneel ist.

## Revendications

1. Un procédé pour le moulage de panneaux dans un système de moulage de feuilles formé d'un dispositif d'alimentation de feuilles thermoplastiques (10) et de deux moitiés de moule (18), le procédé comprenant les étapes :
(a) de sortie de deux couches de revêtement en matériau thermoplastique (12, 14) entre les deux moitiés du moule (18) par le dispositif d'alimentation de feuilles thermoplastiques (10) ;
(b) d'insertion d'un insert rigidifiant (40) entre les deux couches de revêtement en matériau thermoplastique (12, 14) ;
(c) de fermeture des deux moitiés du moule (18) afin de mettre en contact les deux couches de revêtement en matériau thermoplastique (12, 14) et l'insert (40) pour former un sandwich thermoplastique ; et
(d) de compression du sandwich thermoplastique entre les deux moitiés du moule (18) pour former un panneau
**caractérisé en ce que**
les deux couches (au minimum) de revêtement en matériau thermoplastique (12, 14) sortent verticalement et vers le bas du dispositif de sortie des feuilles thermoplastiques (10) disposé verticalement au-dessus des deux moitiés du moule (18) ; et
une couche de matériau de revêtement (24, 26) est placée sur au moins une moitié du moule (18) et
la couche de matériau de revêtement (24, 26) est entraînée par le côté pour s'aligner avec les couches de revêtement en matériau thermoplastique (12, 14).

2. Procédé décrit dans la revendication 1 **caractérisé en ce que** la couche de matériau de revêtement (24, 26) est déroulée à l'aide d'un système d'un insert ou de rouleau (28, 30) comprenant des systèmes de déroulage des couches de matériau de revêtement (32, 34) et un ou plusieurs galets (36, 38) pour aligner, grâce à un déplacement vers le bas, la couche de matériau de revêtement (24, 26) avec le matériau thermoplastique de revêtement.

3. Procédé décrit dans la revendication 1 dans lequel le dispositif d'alimentation de feuilles thermoplastiques (10) comprend un ou plusieurs dispositifs d'extrusion.

4. Procédé décrit dans la revendication 1 dans lequel la feuille thermoplastique est une feuille de lin et polypropylène.

5. Procédé décrit dans la revendication 1 dans lequel la couche de matériau de revêtement (24, 26) se compose de moquette.

6. Procédé décrit dans la revendication 5 dans lequel la couche de matériau de revêtement (24, 26) est entraînée vers la moitié du moule (18) qui forme la face supérieure de la partie formée.

7. Procédé décrit dans la revendication 1 dans lequel les couches de revêtement en matériau thermoplastique (12, 14) entraînées vers les moitiés du moule (18) sont composées du même matériau thermoplastique.

8. Procédé décrit dans la revendication 1 dans lequel les couches de revêtement en matériau thermoplastique (12, 14) entraînées vers les moitiés du moule (18) sont composées de différents matériaux thermoplastiques.

9. Un panneau thermoplastique de structure sandwich insert fabriqué par le procédé décrit dans la revendication 1 comprenant au moins deux couches de revêtement en matériau thermoplastique (12, 14) contiguës à au moins deux faces d'un insert rigidifiant (40) partiellement formé ou pré-moulé et au moins une couche d'un matériau décoratif (24, 26) et où l'insert se compose d'un matériau de noyau thermoplastique poreux et compatible.

10. Le sandwich insert thermoplastique selon la revendication 9 **caractérisé en outre en ce que** le matériau de noyau thermoplastique poreux[VI] et compatible est une mousse d'insonorisation / acoustique.

11. Le sandwich insert thermoplastique selon l'une quelconque des revendications 9 et 10 **caractérisé en outre en ce qu'**il est un panneau en stratifié.

12. Le panneau en stratifié décrit dans la revendication 11 **caractérisé en outre en ce qu'**il est un panneau de garniture pour automobile.
